# EUROPEAN PATENT SPECIFICATION

(11) **EP 1 831 004 B1**
(45) Date of publication and mention of the grant of the patent: **25.02.2009**
(21) Application number: 05825922.7
(22) Date of filing: 22.12.2005
(51) Int. Cl.: B29D 30/44, B29D 30/42, B29D 30/46

(54) **DEVICE FOR PICKING UP, DISPLACING, PLACING AND CUTTING BANDS OR STRIPS OF FLEXIBLE MATERIAL**
VORRICHTUNG ZUM AUFNEHMEN, ANORDNEN, PLATZIEREN UND SCHNEIDEN VON BÄNDERN ODER STREIFEN AUS FLEXIBLEM MATERIAL
DISPOSITIF DE SAISIE, DE DEPLACEMENT, DE MISE EN PLACE ET DE COUPAGE DE BANDES OU DE RUBANS DE MATIERE SOUPLE

(30) Priority: 22.12.2004 NL 1027846
(43) Date of publication of application: 12.09.2007
(73) Proprietor: VMI EPE HOLLAND B.V., 8161 RK Epe (NL)
(72) Inventor: GUTKNECHT, Heinz, NL-8161 AT Epe (NL)
(74) Representative: De Hoop, Eric
(86) International application number: PCT/NL2005/000882
(87) International publication number: WO 2006/068474

(56) References cited:
- DE-A1- 1 556 022
- FR-A- 1 339 391
- JP-A- 1 225 536
- US-A- 3 803 965
- US-A- 4 411 724
- US-A- 4 954 205
- US-A- 5 123 231
- PATENT ABSTRACTS OF JAPAN vol. 012, no. 195 (M-705), 7 June 1988 (1988-06-07) -& JP 63 001531 A (MITSUBISHI HEAVY IND LTD), 6 January 1988 (1988-01-06)

## Description

The invention relates to an assembly comprising a device for picking up, displacing and placing a band or strip of flexible material, particularly unvulcanised rubber, more particularly unvulcanised rubber provided with reinforcement cords, according to the preamble of claim 1.

Such a device for picking up, displacing and placing a band or strip of flexible material is known from JP-A-63001531.

It is an object of the invention to provide an alternative assembly.

The object is solved by the features of claim 1.

In such an assembly a strip can simply be passed past the cutting device whereas the position is at all times fixed. Moreover the displacement is fast.

In one embodiment of this assembly the placement unit comprises a conveyor belt having a conveyor member having a longitudinal axis parallel to the supply direction and having a feed side which, when the assembly is operative, is displaceable from the supply device to the discharge device. Such a device can even move in between a lower and upper blade of a cutting device without disrupting or slowing down the latter's action.

In one embodiment of the assembly the retaining unit is displaceable parallel to the conveyor belt.

In one embodiment of the assembly the retaining unit has an end oriented towards the cutting device, which retaining unit is provided with the second roller, wherein the retaining unit is displaceable from a first position with the second roller upstream with respect to the cutting device to a second position with the second roller downstream past the cutting device.

In one embodiment of said assembly the supply device is provided with a supply surface on which a band can be supplied, preferably the supply device comprises a supply conveyor belt, and the second roller in the first position is above the supply surface, preferably just above the supply surface for taking off a band or strip therefrom.

In one embodiment of said assembly the supply unit is displaceable in line with respect to the supply device.

In one embodiment of said assembly the discharge device is provided with a discharge surface on which a strip or a component manufactured therefrom can be discharged, preferably the discharge device comprises a discharge conveyor belt, and the second roller in the second position is above the discharge surface, preferably just above the discharge surface for discharging a band or strip thereon.

In one embodiment of the assembly the first roller is positioned in line with respect to the second roller wherein a notional tangent line notionally contacting the first and second roller is substantially parallel to the supply surface.

In one embodiment of the assembly the first roller is positioned in line with respect to the second roller wherein a notional tangent line notionally contacting the first and second roller is substantially parallel to the discharge surface.

In one embodiment of the assembly the roller is positioned downstream past the second position.

In one embodiment of the assembly the supply device is positioned with respect to the discharge device such that the supply direction is at an angle to the discharge direction.

The Invention will be further elucidated on the basis of exemplary embodiment of a device, assembly end method according to the invention, in which further advantages are explained and in which:
Figure 1 shows a front view of an assembly according to the invention;
Figure 1B shows the assembly of figure 1 in top view;
Figure 2 shows the front view of figure 1 during a first process step;
Figure 3 shows figure 1 during a further process step;
Figure 4 shows the front view of figure 1 in a next process step;
Figure 5 shows the front view of figure 1 in a next process step;
Figure 6 shows the overall displacement distance the largest moving part of the displacement device according to the invention has to go;
Figure 7 shows a placement device according to the state of the art; and
Figure 8 shows an assembly according to the invention shown in perspective.

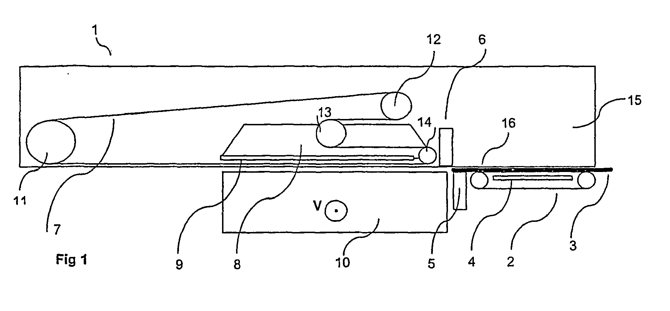

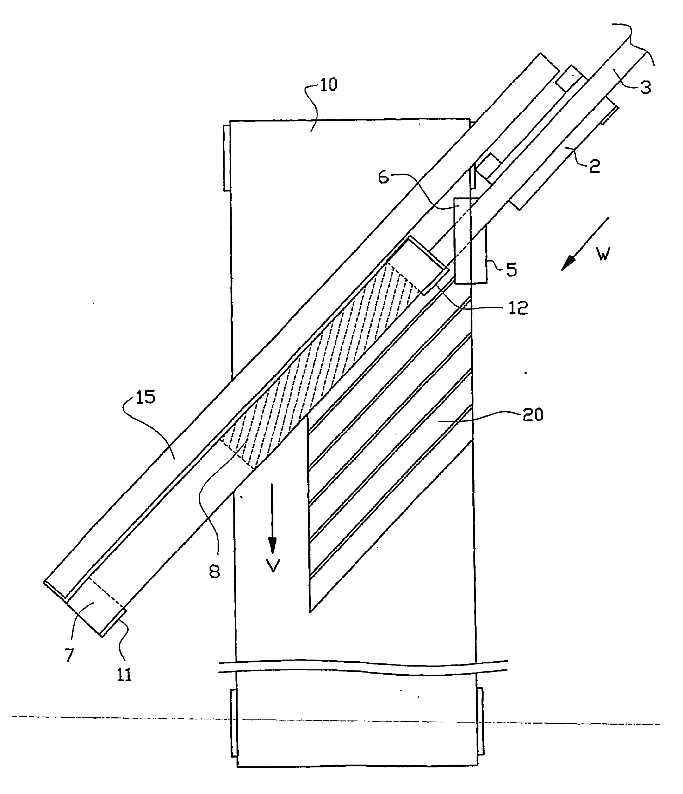

In figure 1 a front view is shown of an assembly according to the invention provided with a placement device 1, a supply belt 2, which here is provided with retaining means 4 such as magnetic or vacuum means, with a band of rubber material 3 thereon. The band is in this case a continuous band provided with parallel reinforcement cords in the longitudinal direction of the band. The band is in this case obtained from an extruder.

The assembly has furthermore been provided with a cutting device, in this case comprising an upper blade 6 and a lower blade 5. The cutting device is positioned at the outlet side 16 of the supply conveyor belt 2. Upstream with respect to the supply conveyor belt 2 and adjacent to the blades 5, 6 a discharge conveyor device 10, in this case a conveyor, for instance a so-called toothed belt or timing belt conveyor is positioned. Said conveyor 10 is positioned with its conveyance direction pointing out of the paper in the direction V.

The placement device 1 is provided with a conveyor belt 7, which runs over rollers 11, 12, 13 and 14. The placement device is provided with a frame 15, on which the rollers 11 and 12 are fixedly mounted with respect to each other. The placement device is further provided with a placement unit 8, which with respect to frame 15 is reciprocally movable upstream and downstream, in this case from right to left and vice versa. The roller 14 of the conveyor belt and the roller 13 are fixedly mounted with respect to each other on the movable or displaceable placement unit 8. The position of the rollers and the mutual movement of the frame 15 and the placement unit 8 are such that in case of displacement of the placement unit 8 with respect to the frame 15 the conveyor belt remains under tension.

The placement unit 8 is furthermore provided with retaining means 9 which extend up to the conveyor belt 7. Said retaining means may for instance be an electromagnet that can be switched on and off, or means for creating a vacuum.

Figure 1B shows the device of figure 1 in top view. It can clearly be seen here that the conveyor belt 7 and the strip 3 are in line. On the conveyor belt 10 a belt layer 20 is built up by placing strips next to each other. Abutting said strips is among other things described in the said PCT/NL03/00926 of this applicant. As a result a parallelogram-shaped belt layer is created provided with reinforcement cords at a cord angle.

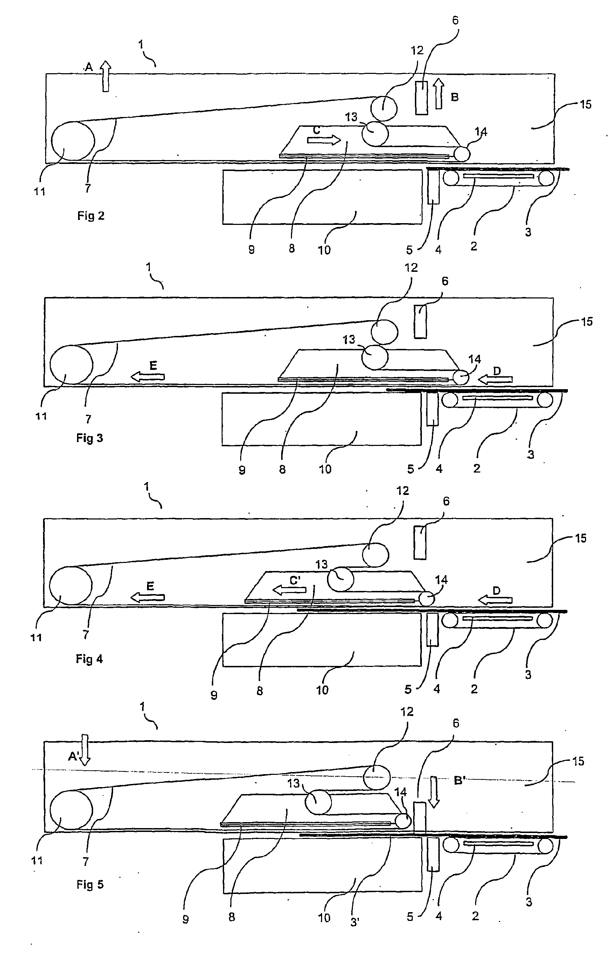

In figure 2 the first step in the process cycle for producing a strip material is shown. By means of supply conveyor 2 a band of material 3 is supplied up to the cutting device (5, 6). The upper blade 6 is moved upward in the direction indicated with arrow B in order to allow passage to the placement unit 8, wherein, as the pressure roller 13 and roller 14 are at a mutually fixed position on the placement unit 8, the conveyor belt 7 extends to past the blades of the cutting device up to the supply device 2 up to the rubber material 3. At the beginning of the motion of the placement unit 8 the entire frame 15 is moved slightly upward, indicated with arrow A. At the end of this step in the process the placement unit with the conveyor belt 7 is positioned past the cutting device and above the supply device 2 and above the band of rubber material 3.

In the figure the upper blade 6 makes a stroke with respect to the lower blade 5 which is large enough to let the entire placement unit 8 pass. The stroke may due to the selected dimensioning even be selected so small that the roller 14 can just be let through. As a result a smaller stroke and thus an even greater speed is possible.

Figure 3 shows the next step depicted in the treatment device. The supply device 2 is activated by means of servomotor (not shown) and conveys the band of rubber material 3 in the supply direction indicated with arrow D. A servomotor provided for driving the rollers, in this case a servomotor which drives roller 12 of the conveyor belt 7, has also been activated. By driving a roller attached to the frame, it is possible to drive the conveyor belt 7 whereas the drive itself need not be displaced.

The retaining means 9 of the placement unit 8 are activated so that the rubber material is also retained on the conveyor belt 7 and by activating the conveyor belt 7 the rubber material 3, that is retained against the conveyor belt 7, is conveyed in the direction E. The rubber material 3 is now conveyed in cooperation of both the conveyor belt 7 of the placement device and the supply device 2, wherein the speed of circulation of the roller 12 determines the running speed of conveyor belt. Simultaneously a length measurement of the material that has been conveyed past the blades is started, for instance in the way as described in among others applicant's EP-B1-649.730.

Figure 4 shows the next step in the process of producing a strip of material. In this step the conveyor belt 7 is still running in the direction E, as a result of which the rubber material 3 is displaced and the supply device 2 still runs as a result of which the rubber material is displaced in the direction D. The rubber material 3 thus is among others displaced due to the cooperation of the course of conveyor belt 7 of the displacement device with the supply device 2. As on both the supply conveyor belt 2 and the conveyor belt 7 of the placement device 1 the material 3 is retained by means of retaining means 4 and 9, the material 3 will be highly reliably displaced. The figure further shows that the placement unit 8 also moves in the direction C'.

Figure 5 shows the step of cutting the material 3. The placement unit 8 is now downstream past the blades 5 and 6. The upper blade 6 moves in the direction indicated with arrow B¹ and thus cuts off a strip from the end of the band of rubber material 3. Because the retaining means 4 and 9 are still activated, both the end of the strip and the band 3 are properly positioned and cannot move during cutting. Band 3 has been passed past the cutting device according to an entered length. The placement device moves downward in the direction A' in order to place the band on the conveyor belt 10. After that the band is cut and the frame 15 moves upward. The cut off strip is optionally passed further by the placement unit 8 on the belt of discharge conveyor 10.

When the cut off strip is at the correct position on conveyor belt 10 retaining means 9 will be switched off (for instance electromagnets are switched off). Simultaneously retaining means of conveyor belt 10 are switched on, as a result of which the band is retained on the conveyor belt 10.

After that the discharge conveyor 10 is activated in order to carry out a displacement either such that the next strip can be placed against a preceding strip, or for discharging a complete component, built up from several strips. This procedure is for instance discussed in detail in said PCT/NL03/00926.

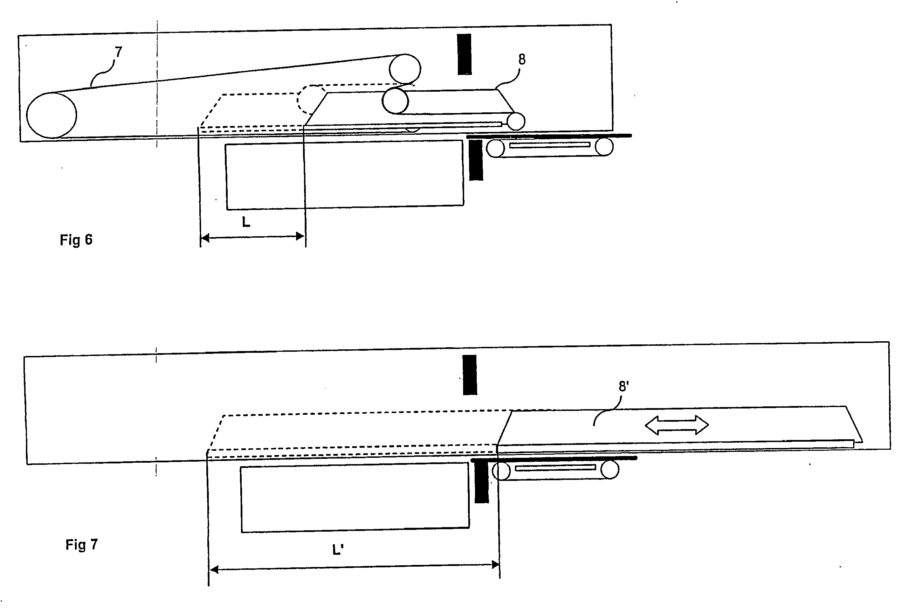

Figure 6 shows in one figure both ultimate positions of the placement unit 8. For the sake of clarity one of the positions is shown in dotted lines. As the bands 3' are displaced by both the motion of the conveyor belt 7 and the placement unit 8 the overall displacement stroke of the displacement unit 8 can be limited to a displacement distance L. For comparison purposes figure 7 shows a placement device 8' according to the state of the art. Said placement unit 8' moves entirely over a placement length L', which is almost equal to the overall length of a strip to be cut off. As a result a very long displacement path has to be traversed and the process will be considerably slowed down.

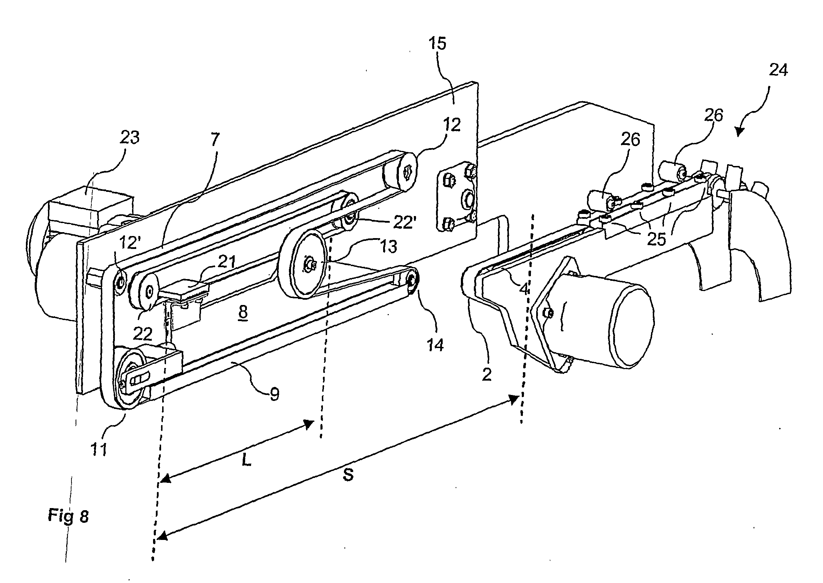

Figure 8 shows an alternative embodiment in perspective of a device according to the invention. The placement unit 8 is in this case driven by means of electromotor 23 driving a toothed belt 22. On the toothed belt 22 a clamp 21 has been attached which is connected to the placement unit. By means of the electromotor with toothed belt the placement unit is displaceable over path L. The electromotor 23 itself need not be displaced here.

Because also the conveyor belt 7 is drivable a band can be displaced over a distance S by displacing the placement unit over a distance L in cooperation with the conveyor belt.

The conveyor belt 7 here runs over four rollers, wherein rollers 13 and 14 are connected to placement unit 8. Rollers 11, 12, 12' have been mounted on frame 15. Due to the chosen structure only placement frame 8 with the rollers needs to be reciprocally moved, that means upstream and downstream, and the drive for the conveyor belt and the drive 23 of the placement frame 8 can be stationary mounted on frame 15. As a result the mass to be brought into motion can be kept as small as possible and it is possible to achieve a very high production speed. Moreover both the strip and the band are continuously retained so that the location is known and placement of the strips can take place accurately.

Due to the small diameter of roller 14 the stroke of the blades can moreover be kept limited.

Due to the selection of the rollers it is moreover possible to move the placement frame 8 while the conveyor belt does not rotate with respect to frame 15, that means remains stationary or does not circulate.

## Claims

1. Assembly, comprising a device for picking up, displacing and placing a band or strip of flexible material, with a leading end of the strip or band from a starting position to an end position in a downstream direction, comprising:
- a frame;
- a conveyor belt which runs over at least a first roller having a first axis of rotation and a second roller having a second axis of rotation, and
- a retaining unit provided with retaining means for retaining the strip or band onto the conveyor belt,
wherein the frame is provided with the first roller, the retaining unit is displaceably mounted on the frame and provided with the second roller, the device is furthermore provided with tensioning means for keeping the conveyor belt tensioned during the displacement of the retaining unit, and the second roller has a first position with the second axis of rotation upstream from the starting position, **characterized in that** the assembly, further comprises a cutting device for along a cutting line cutting off a strip from an end of the band, positioned between the starting position and the end position, wherein the device is positioned downstream from the cutting device for when operative extending upstream past the cutting device and picking up the band at its end, subsequently passing the end of the band downstream past the cutting device, with when operative the first position of the second roller upstream from the cutting line.

2. Assembly according to claim 1, wherein the band is provided with reinforcement cords extending in longitudinal direction of the band, and wherein the cutting device is positioned for cutting with the cutting line at an angle to the reinforcement cords.

3. Assembly according to claim 1 or 2, further comprising:
- a supply device for supplying the band to the cutting device in a supply direction;
- a discharge device for discharging the strip cut off by the cutting device in a discharge direction,
wherein the device is placed for picking up the band from the supply device and bringing the end of the band past the cutting device and subsequently bringing the strip cut off by the cutting device from the end of the band on the discharge device, or bringing the end of the band on the discharge device.

4. Assembly according to any one of the claims 1-3, wherein the placement unit comprises a conveyor belt having a conveyor member having a longitudinal axis parallel to the supply direction and having a feed side which, when the assembly is operative, is displaceable from the supply device to the discharge device.

5. Assembly according to any one of the claims 1-4, wherein the retaining unit is displaceable parallel to the conveyor belt.

6. Assembly according to any one of the claims 1-5, wherein the retaining unit has an end oriented towards the cutting device, which retaining unit is provided with the second roller, wherein the retaining unit is displaceable from a first position with the second roller upstream with respect to the cutting device to a second position with the second roller downstream past the cutting device.

7. Assembly according to claim 6, wherein the supply device is provided with a supply surface on which a band can be supplied, preferably the supply device comprises a supply conveyor belt, and the second roller in the first position is above the supply surface, preferably just above the supply surface for taking off a band or strip therefrom.

8. Assembly according to claim 6 or 7, wherein the supply unit is displaceable in line with respect to the supply device.

9. Assembly according to any one of the claims 6-8, wherein the discharge device is provided with a discharge surface on which a strip or a component manufactured therefrom can be discharged, preferably the discharge device comprises a discharge conveyor belt, and the second roller in the second position is above the discharge surface, preferably just above the discharge surface for discharging a band or strip thereon.

10. Assembly according to any one of the claims 6-9, wherein the first roller is positioned in line with respect to the second roller wherein a notional tangent line notionally contacting the first and second roller is substantially parallel to the supply surface.

11. Assembly according to any one of the claims 6-10, wherein the first roller is positioned in line with respect to the second roller wherein a notional tangent line notionally contacting the first and second roller is substantially parallel to the discharge surface.

12. Assembly according to any one of the claims 6-10, wherein the first roller is positioned downstream past the second position.

13. Assembly according to any one of the claims 6-12, wherein the supply device is positioned with respect to the discharge device such that the supply direction is at an angle to the discharge direction.

## Patentansprüche

1. Anordnung umfassend eine Vorrichtung zum Aufnehmen, Verschieben und Platzieren eines Bands oder Streifens von flexiblem Material mit einem vorderen Ende des Streifens oder Bands von einer Startposition in eine Endposition in nachgelagerter Richtung, umfassend:
- einen Rahmen;
- ein Förderband, das über wenigstens eine erste Rolle, die eine erste Drehachse aufweist, und eine zweite Rolle läuft, die eine zweite Drehachse aufweist, und
- eine Halteeinheit, die mit Haltemitteln zum Halten des Streifens oder Bands auf dem Förderband versehen ist,
wobei der Rahmen mit der ersten Rolle versehen ist, die Halteeinheit verschiebbar an dem Rahmen angebracht und mit der zweiten Rolle versehen ist, die Vorrichtung weiterhin mit Spannmitteln versehen ist, um das Förderband während des Verschiebens der Halteeinheit gespannt zu halten, und die zweite Rolle eine erste Position hat, bei der die zweite Drehachse der Startposition vorgelagert ist, **dadurch gekennzeichnet, dass** die Anordnung weiterhin eine Schneidvorrichtung aufweist, um entlang einer Schneidlinie einen Streifen von einem Ende des Bands abzuschneiden, angeordnet zwischen der Startposition und der Endposition, wobei die Vorrichtung der Schneidvorrichtung nachgelagert angeordnet ist, so dass sie sich im Betrieb in vorgelagerter Richtung hinter die Schneidvorrichtung erstreckt und das Band an seinem Ende aufnimmt, wobei sie nachfolgend das Ende des Bands in nachgelagerter Richtung hinter die Schneidvorrichtung bringt, wobei im Betrieb die erste Position der zweiten Rolle der Schneidlinie vorgelagert ist.

2. Anordnung nach Anspruch 1, bei der das Band mit Verstärkungskorden versehen ist, die sich in Längsrichtung des Bands erstrecken, und bei der die Schneidvorrichtung für ein Schneiden mit der Schneidlinie in einem Winkel zu den Verstärkungskorden angeordnet ist.

3. Anordnung nach Anspruch 1 oder 2, weiterhin umfassend:
- eine Zufuhrvorrichtung zum Zuführen des Bands zu der Schneidvorrichtung in einer Zufuhrrichtung;
- eine Abfuhrvorrichtung zum Abführen des von der Schneidvorrichtung abgeschnittenen Streifens in einer Abfuhrrichtung;
wobei die Vorrichtung so platziert ist, dass sie das Band von der Zufuhrvorrichtung aufnimmt und das Ende des Bands hinter die Schneidvorrichtung bringt und nachfolgend den von der Schneidvorrichtung abgeschnittenen Streifen von dem Ende des Bands auf die Abfuhrvorrichtung bringt oder das Ende des Bands auf die Abfuhrvorrichtung bringt.

4. Anordnung nach einem der Ansprüche 1-3, bei der die Platzierungseinheit ein Förderband umfasst, das ein Förderglied aufweist, das eine Längsachse parallel zu der Zufuhrrichtung und eine Speiseseite hat, die, wenn die Anordnung in Betrieb ist, von der Zufuhrvorrichtung zu der Abfuhrvorrichtung verschiebbar ist.

5. Anordnung nach einem der Ansprüche 1-4, bei der die Halteeinheit parallel zu dem Förderband verschiebbar ist.

6. Anordnung nach einem der Ansprüche 1-5, bei der die Halteeinheit ein Ende hat, das zu der Schneidvorrichtung ausgerichtet ist, wobei die Halteeinheit mit der zweiten Rolle versehen ist, wobei die Halteeinheit aus einer ersten Position, in der die zweite Rolle bezüglich der Schneidvorrichtung vorgelagert angeordnet ist, in eine zweite Position, in der die zweite Rolle hinter der Schneidvorrichtung nachgelagert angeordnet ist, verschiebbar ist.

7. Anordnung nach Anspruch 6, bei der die Zufuhrvorrichtung mit einer Zufuhroberfläche versehen ist, auf der ein Band zugeführt werden kann, bevorzugt umfasst die Zufuhrvorrichtung ein Zufuhr-Förderband, und die zweite Rolle in der ersten Position befindet sich über der Zufuhroberfläche, bevorzugt direkt über der Zufuhroberfläche, um ein Band oder einen Streifen von dort abzunehmen.

8. Anordnung nach Anspruch 6 oder 7, bei der die Zufuhreinheit in einer Linie bezüglich der Zufuhrvorrichtung verschiebbar ist.

9. Anordnung nach einem der Ansprüche 6 - 8, bei der die Abfuhrvorrichtung mit einer Abfuhroberfläche versehen ist, auf der ein Streifen oder eine daraus angefertigte Komponente abgeführt werden kann, bevorzugt umfasst die Abfuhrvorrichtung ein Abfuhr-Förderband, und die zweite Rolle in der zweiten Position befindet sich über der Abfuhroberfläche, bevorzugt direkt über der Abfuhroberfläche zum Abführen eines Bands oder Streifens darauf.

10. Anordnung nach einem der Ansprüche 6-9, bei der die erste Rolle in einer Linie bezüglich der zweiten Rolle angeordnet ist, wobei eine fiktive Tangente, die fiktiv die erste und die zweite Rolle berührt, im Wesentlichen parallel zu der Zufuhroberfläche ist.

11. Anordnung nach einem der Ansprüche 6-10, bei der die erste Rolle in einer Linie bezüglich der zweiten Rolle angeordnet ist, wobei eine fiktive Tangente, die fiktiv die erste und die zweite Rolle berührt, im Wesentlichen parallel zu der Abfuhroberfläche ist.

12. Anordnung nach einem der Ansprüche 6-10, bei der die erste Rolle nachgelagert hinter der zweiten Position angeordnet ist.

13. Anordnung nach einem der Ansprüche 6 - 12, bei der die Zufuhrvorrichtung bezüglich der Abfuhrvorrichtung so angeordnet ist, dass die Zufuhrrichtung in einem Winkel zu der Abfuhrrichtung verläuft.

## Revendications

1. Ensemble comprenant un dispositif pour saisir, déplacer et placer une bande ou ruban de matériau flexible, avec une extrémité d'attaque du ruban ou de la bande d'une position de départ à une position de fin dans une direction en aval, comprenant :
- un châssis ;
- une courroie transporteuse qui circule sur au moins un premier rouleau ayant un premier axe de rotation et un deuxième rouleau ayant un deuxième axe de rotation, et
- une unité de retenue dotée de moyens de retenue pour retenir le ruban ou la bande sur la courroie transporteuse,
dans lequel le châssis est prévu avec le premier rouleau, l'unité de retenue est montée de manière déplaçable sur le châssis et prévue avec le deuxième rouleau, le dispositif est en outre doté de moyens de tension pour maintenir la courroie transporteuse tendue pendant le déplacement de l'unité de retenue, et le deuxième rouleau a une première position avec le deuxième axe de rotation en amont de la position de départ, **caractérisé en ce que** l'ensemble comprend en outre un dispositif de coupe pour, le long à une ligne de coupe, couper un ruban d'une extrémité de la bande, positionnée entre la position de départ et la position de fin, dans lequel le dispositif est positionné en aval du dispositif de coupe pour, lorsqu'il est opérationnel, s'étendre en amont au-delà du dispositif de coupe et saisir la bande à son extrémité, en faisant passer par la suite l'extrémité de la bande en aval au-delà du dispositif de coupe, avec lorsqu'il est opérationnel, la première position du deuxième rouleau en amont de la ligne de coupe.

2. Ensemble selon la revendication 1, dans lequel la bande est prévue avec des cordes de renforcement s'étendant dans la direction longitudinale de la bande, et dans lequel le dispositif de coupe est positionné pour couper avec la ligne de coupe à un angle par rapport aux cordes de renforcement.

3. Ensemble selon la revendication 1 ou 2, comprenant en outre :
- un dispositif d'alimentation pour alimenter la bande au dispositif de coupe dans une direction d'alimentation ;
- un dispositif de décharge pour décharger le ruban coupé par le dispositif de coupe dans une direction de décharge,
dans lequel le dispositif est placé pour saisir la bande du dispositif d'alimentation et amener l'extrémité de la bande au-delà du dispositif de coupe et amener par la suite le ruban coupé par le dispositif de coupe de l'extrémité de la bande sur le dispositif de décharge, ou amener l'extrémité de la bande sur le dispositif de décharge.

4. Ensemble selon l'une quelconque des revendications 1 à 3, dans lequel l'unité de mise en place comprend une courroie transporteuse ayant un élément formant convoyeur ayant un axe longitudinal parallèle à la direction d'alimentation et ayant un côté d'alimentation qui, lorsque l'ensemble est opérationnel, est déplaçable du dispositif d'alimentation au dispositif de décharge.

5. Ensemble selon l'une quelconque des revendications 1 - 4, dans lequel l'unité de retenue est déplaçable parallèlement à la courroie transporteuse.

6. Ensemble selon l'une quelconque des revendications 1 - 5, dans lequel l'unité de retenue a une extrémité orientée vers le dispositif de coupe, laquelle unité de retenue est prévue avec le deuxième rouleau, dans lequel l'unité de retenue est déplaçable d'une première position avec le deuxième rouleau en amont par rapport au dispositif de coupe à une deuxième position avec le deuxième rouleau en aval au-delà du dispositif de coupe.

7. Ensemble selon la revendication 6, dans lequel le dispositif d'alimentation est prévu avec une surface d'alimentation sur laquelle une bande peut être alimentée, de préférence le dispositif d'alimentation comprend une courroie transporteuse d'alimentation, et le deuxième rouleau dans la première position est au-dessus de la surface d'alimentation, de préférence juste au-dessus de la surface d'alimentation pour retirer une bande ou un ruban de celle-ci.

8. Ensemble selon la revendication 6 ou 7, dans lequel l'unité d'alimentation est déplaçable de manière linéaire par rapport au dispositif d'alimentation.

9. Ensemble selon l'une quelconque des revendications 6 - 8, dans lequel le dispositif de décharge est prévu avec une surface de décharge sur laquelle un ruban ou un composant fabriqué à partir de celui-ci peut être déchargé, de préférence le dispositif de décharge comprend une courroie transporteuse de décharge, et le deuxième rouleau dans la deuxième position est au-dessus de la surface de décharge, de préférence juste au-dessus de la surface de décharge pour décharger une bande ou un ruban de celle-ci.

10. Ensemble selon l'une quelconque des revendications 6 - 9, dans lequel le premier rouleau est positionné de manière linéaire par rapport au deuxième rouleau, dans lequel une ligne tangente théorique en contact théorique avec les premier et deuxième rouleaux est sensiblement parallèle à la surface d'alimentation.

11. Ensemble selon l'une quelconque des revendications 6 - 10, dans lequel le premier rouleau est positionné de manière linéaire par rapport au deuxième rouleau dans lequel une ligne tangente théorique en contact théorique avec les premier et deuxième rouleaux est sensiblement parallèle à la surface de décharge.

12. Ensemble selon l'une quelconque des revendications 6 - 10, dans lequel le premier rouleau est positionné en aval au-delà de la deuxième position.

13. Ensemble selon l'une quelconque des revendications 6 - 12, dans lequel le dispositif d'alimentation est positionné par rapport au dispositif de décharge de sorte que la direction d'alimentation est à un angle par rapport à la direction de décharge.
